(19) Europäisches Patentamt / European Patent Office / Office européen des brevets

(11) **EP 3 616 357 B1**

(12) **EUROPÄISCHE PATENTSCHRIFT**

(45) Veröffentlichungstag und Bekanntmachung des Hinweises auf die Patenterteilung:
**14.12.2022  Patentblatt 2022/50**

(21) Anmeldenummer: **18726718.2**

(22) Anmeldetag: **24.04.2018**

(51) Internationale Patentklassifikation (IPC):
**H04L 9/32** (2006.01)      **H04W 4/00** (2018.01)
**H04J 13/16** (2011.01)      **G08G 1/00** (2006.01)

(52) Gemeinsame Patentklassifikation (CPC):
**H04L 9/32; H04J 13/0074; H04J 13/16; H04L 63/0428; H04W 4/46;** H04L 2209/34; H04L 2209/84; H04W 56/0015

(86) Internationale Anmeldenummer:
**PCT/DE2018/100392**

(87) Internationale Veröffentlichungsnummer:
**WO 2018/196919 (01.11.2018 Gazette 2018/44)**

(54) **KOMMUNIKATIONSVERFAHREN, MOBILE EINHEIT, SCHNITTSTELLENEINHEIT UND KOMMUNIKATIONSSYSTEM**

COMMUNICATION METHOD, MOBILE UNIT, INTERFACE UNIT AND COMMUNICATION SYSTEM

PROCÉDÉ DE COMMUNICATION, UNITÉ MOBILE, UNITÉ D'INTERFACE ET SYSTÈME DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2017  DE 102017207185**

(43) Veröffentlichungstag der Anmeldung:
**04.03.2020  Patentblatt 2020/10**

(73) Patentinhaber:
• **Technische Universität München
80333 München (DE)**
• **Bayerische Motoren Werke Aktiengesellschaft
80809 München (DE)**

(72) Erfinder:
• **BOCHE, Holger
10318 Berlin (DE)**

• **ARENDT, Christian
81547 München (DE)**

(74) Vertreter: **Hoefer & Partner Patentanwälte mbB
Pilgersheimer Straße 20
81543 München (DE)**

(56) Entgegenhaltungen:
EP-A1- 3 032 761      WO-A1-2016/155647
US-A1- 2009 063 861      US-A1- 2016 119 073

• **ZHAO KEPENG ET AL: "Resource allocation in device-to-device communication underlaid cellular network using SCMA: An opportunistic approach", 2015 IEEE/CIC INTERNATIONAL CONFERENCE ON COMMUNICATIONS IN CHINA (ICCC), IEEE, 2. November 2015 (2015-11-02), Seiten 1-6, XP032889179, DOI: 10.1109/ICCCHINA.2015.7448748 [gefunden am 2016-04-06]**

EP 3 616 357 B1

**Beschreibung**

Die vorliegende Erfindung betrifft ein Kommunikationsverfahren für die Kommunikation zwischen mobilen Einheiten, eine mobile Einheit als solche, eine Schnittstelleneinheit sowie ein Kommunikationssystem. Die vorliegende Erfindung betrifft insbesondere ein Kommunikationsverfahren zwischen Fahrzeugen.

Im Bereich der Fahrzeugtechnik, aber auch bei mobilen Einrichtungen oder Einheiten im Allgemeinen, spielen Aspekte der Kommunikation eine wachsende Rolle. Dies erfordert den Aufbau und die Aufrechterhaltung sicherer und robuster Kommunikationsverbindungen als Grundvoraussetzung, insbesondere im Zusammenhang mit fahrzeuggebundenen Ad-hoc-Netzwerken, die auch als Vehicular Ad-hoc NETwork (VANET) bezeichnet werden. Im Hinblick auf Sicherheitsaspekte - auch im Bereich der Fahrzeug-zu-Fahrzeugkommunikation - werden dabei verschiedene Angriffsszenarien und entsprechende Sicherheitsvoraussetzungen einer genaueren Betrachtung unterzogen. Dies betrifft insbesondere auch Aspekte einer Verweigerung oder Blockade eines Dienstes, zum Beispiel im Sinne eines Denial-of-Service (DoS) und die damit im Zusammenhang stehende Verfügbarkeit eines Dienstes oder Services (englisch: Service Availability, SA).

Resource allocation in device-to-device communication underlaid cellular network using SCMA: An opportunistic approach, Zhao Kepeng et al., 2 November 2015, 2015 IEEE/CIC INTERNATIONAL CONFERENCE ON COMMUNICATIONS IN CHINA (ICCC), IEEE, offenbart Zuteilung deterministischer SCMA Codebücher für D2D Verbindungen. US2009/063861 A1 offenbart ein System zum Speichern und Austausch von Sicherheitsschlüsseln. US2016/119073 A1 offenbart ein Verfahren für die Generierung von mehreren Blocksequenzen mit niedrigen PAPR.

Bei herkömmlichen Kommunikationsverfahren ist problematisch, dass ein externer Störer, der oft auch als Jammer bezeichnet wird, entweder vorsätzlich oder auf Grund technischer Überschneidungen im Sinne der Kommunikationsressourcen, einen Kommunikationskanal zwischen mobilen Einheiten empfindlich beeinträchtigen kann. Dabei bringen ein Umschalten (switching) oder Springen (hopping) zwischen Sendekanälen trotz des apparativen und technischen Mehraufwands nur begrenzt eine Auflösung für das zu Grunde liegende Problem.

Es ist Aufgabe der vorliegenden Erfindung, ein Kommunikationsverfahren für die Kommunikation zwischen mobilen Einheiten und insbesondere zwischen Fahrzeugen, eine mobile Einheit und insbesondere ein Fahrzeug als solche mit Fähigkeiten der Kommunikation, eine Schnittstelleneinheit zur Kommunikation sowie ein Kommunikationssystem insgesamt zu schaffen, bei welchen mit besonders einfachen Mitteln ein höheres Maß an Zuverlässigkeit mit reduziertem Eingriff durch Störer bei der Kommunikation zwischen mobilen Einheiten und insbesondere zwischen Fahrzeugen möglich ist.

Die Lösung dieser Aufgabe erfolgt bei einem Kommunikationsverfahren zwischen mobilen Einheiten erfindungsgemäß mit den Merkmalen des Anspruchs 1, bei einer mobilen Einheit erfindungsgemäß mit den Merkmalen des Anspruchs 6, bei einer Schnittstelleneinheit erfindungsgemäß mit den Merkmalen des Anspruchs 7 sowie bei einem Kommunikationssystem erfindungsgemäß mit den Merkmalen des Anspruchs 9. Vorteilhafte Weiterbildungen sind Gegenstand der jeweiligen abhängigen Ansprüche. Gemäß einem ersten Aspekt der vorliegenden Erfindung wird ein Kommunikationsverfahren für die Kommunikation zwischen mobilen Einheiten und insbesondere zwischen Fahrzeugen geschaffen.

**Ein** Kernaspekt der vorliegenden Erfindung besteht also darin, eine Synchronisation zwischen mobilen Einheiten, die in Kommunikation miteinander treten sollen, über eine externe Schnittstelle durchzuführen, welche dazu die Struktur der Kodier-Dekodiereinheiten extern bestimmt und/oder festlegt und die Festlegung den mobilen Einheiten mitteilt. Das Mitteilen besteht nicht zwangsläufig in der tatsächlichen Übertragung des zu verwendenden Codebuches, sondern insbesondere im Übertragen von Information an die mobilen Einheiten, welche zur Festlegung des Codebuches und letztlich der Kodier-Dekodiereinheiten in den mobilen Einheiten geeignet ist.

Es bieten sich unterschiedliche Möglichkeiten an, den Vorgang des Bestimmens des definierenden oder festlegenden Codebuches zu realisieren.

Bei einer anderen zusätzlichen oder alternativen Ausgestaltungsform des erfindungsgemäßen Kommunikationsverfahrens erfolgt das Bestimmen des definierenden Codebuches auf der Grundlage eines zumindest teilweise deterministischen, zufälligen und/oder pseudozufälligen Algorithmus. Gerade ein Vorgehen unter Verwendung zufälliger oder pseudozufälliger Elemente macht den Erfolg eines Angriffs durch einen Störer oder Jammer unwahrscheinlich oder verhindert einen Angriff vollständig (no system breakdown). Dabei können insbesondere Zufallsprozesse oder Zufallsexperimente zum Einsatz kommen.

Das Bestimmen des definierenden und/oder festlegenden Codebuches erfolgt durch Festlegen eines Werts eines das definierende Codebuch bestimmenden Synchronisationselements und insbesondere eines Werts einer Synchronisationsvariablen durch die externe Schnittstelleneinheit. Auf diese Weise kann mit einfachen Mitteln und zuverlässig in den jeweiligen mobilen Einheiten das Codebuch der festzulegenden Kodier-Dekodiereinheiten bestimmt werden, nämlich über Referenz des Werts des Synchronisationselements oder der Synchronisationsvariablen.

Dabei erfolgt das Mitteilen an die mobilen Einheiten vorzugsweise direkt durch Übertragen des konkreten Werts des bestimmenden Synchronisationselements und insbesondere der Synchronisationsvariablen von der externen Schnittstelleneinheit, zum Beispiel durch Übertragung eines Zahlenwerts, welcher dem Codebuch und somit einer entsprechenden Kodier-Dekodiereinheit zugeordnet ist.

Alternativ oder zusätzlich kann es vorgesehen sein, dass das Bestimmen des definierenden Codebuches durch Auswählen eines definierenden Codebuches aus einer diskreten Mehrzahl definierender Codebücher aus einer Codebuchbibliothek oder Codebucheinheit erfolgt und insbesondere durch eine entsprechende Auswahl eines Werts für das bestimmende Synchronisationselement und der Synchronisationsvariablen aus einer diskreten Anzahl von Werten, zum Beispiel in Form von Zahlen, welche die verschiedenen Codebücher durchnummerieren.

Besonders einfache Verhältnisse stellen sich bei einer anderen Ausführungsform des erfindungsgemäßen Kommunikationsverfahrens ein, wenn eine Mehrzahl möglicher definierender Codebücher und insbesondere eine Mehrzahl möglicher Werte für das bestimmende Synchronisationselement und der Synchronisationsvariablen in einer 1-zu-1-Korrespondenz zu einer entsprechenden Mehrzahl von Kodierern und/oder Dekodierern und insbesondere zu einer entsprechenden Mehrzahl zu Grunde liegender Kodier-Dekodiereinheiten steht. Auf diese Weise ist eine zuverlässige Zuordnung der Kodier-Dekodiereinheiten zu entsprechenden Werten der Synchronisationsvariablen und den entsprechenden festlegenden Codebüchern in den mobilen Einheiten einerseits und in der externen Schnittstelleneinheit andererseits gegeben.

Auf der Ebene der einzelnen mobilen Einheiten, die einer Kommunikation miteinander zugeführt werden sollen, bildet sich dabei ein besonders hohes Maß an Sicherheit aus, wenn gemäß einer anderen bevorzugten Ausgestaltungsform des erfindungsgemäßen Kommunikationsverfahrens die mobilen Einheiten auf der Grundlage des von der externen Schnittstelleneinheit mitgeteilten definierenden und/oder festlegenden Codebuches und insbesondere auf der Grundlage des mitgeteilten Werts des Synchronisationselements und insbesondere der Synchronisationsvariablen aus einer in der jeweiligen mobilen Einheit vorgegebenen und insbesondere gespeicherten Codebuchbibliothek oder Codebucheinheit mit einer entsprechenden Mehrzahl möglicher definierender oder festlegender Codebücher ein entsprechendes Codebuch auswählen und so den Kodierer und/oder Dekodierer der jeweiligen mobilen Einheit definieren und festlegen.

Die Erfindung betrifft ferner gemäß einem anderen Aspekt eine mobile Einheit als solche, welche zur Kommunikation mit anderen mobilen Einheiten und/oder mit einer externen Schnittstelleneinheit gemäß dem erfindungsgemäßen Kommunikationsverfahren eingerichtet ist.

Dabei kann eine jeweilige mobile Einheit einen Sendeempfänger, eine Kodier-Dekodiereinheit und eine Steuereinheit zu deren Steuerung aufweisen, insbesondere gemäß dem erfindungsgemäßen Kommunikationsverfahren.

Eine derartige mobile Einheit kann insbesondere als Fahrzeug und vorzugsweise als Kraftfahrzeug ausgebildet sein, zum Beispiel als Personenkraftwagen oder als Lastkraftwagen. Grundsätzlich sind jedoch sämtliche mobilen Vorrichtungen mit dem erfindungsgemäßen Kommunikationsverfahren verwendbar. Dies betrifft insbesondere nicht nur landgebundene mobile Einrichtungen.

Gemäß einem weiteren Aspekt der vorliegenden Erfindung wird auch eine Schnittstelleneinheit als solche geschaffen, welche zur Kommunikation mit zur Schnittstelleneinheit externen mobilen Einheiten, insbesondere gemäß der vorliegenden Erfindung ausgebildet sein können, und/oder mit anderen externen Schnittstelleneinheiten gemäß dem erfindungsgemäßen Kommunikationsverfahren eingerichtet ist.

Bei einer bevorzugten Ausgestaltungsform kann die erfindungsgemäße Schnittstelleneinheit allgemein als externe Infrastrukturkomponente, als Basisstationseinrichtung, als Hotspot, als Road-Side-Unit (RSU), insbesondere gemäß dem DSRC-Standard, und/oder als mobile Einrichtung eines Drahtlosübertragungssystems und insbesondere eines Mobilfunknetzes ausgebildet sein.

Schließlich wird gemäß einem zusätzlichen Aspekt der vorliegenden Erfindung auch ein Kommunikationssystem als solches geschaffen. Ein derartiges Kommunikationssystem ist mit mindestens einer ersten mobilen Einheit, mindestens einer zweiten mobilen Einheit und mindestens einer zu den mobilen Einheiten externen Schnittstelleneinheit ausgebildet.

Die mobilen Einheiten und die externe Schnittstelleneinheit sind erfindungsgemäß dazu eingerichtet, im Zusammenwirken ein erfindungsgemäßes Kommunikationsverfahren auszuführen oder bei einem solchen erfindungsgemäßen Kommunikationsverfahren verwendbar zu sein oder verwendet zu werden.

Dabei kann es insbesondere vorgesehen sein, dass die erste mobile Einheit und/oder die zweite mobile Einheit den erfindungsgemäßen Aufbau aufweisen und/oder dass die externe Schnittstelleneinheit in erfindungsgemäßer Art und Weise ausgebildet ist.

Weitere Einzelheiten, Vorteile und Merkmale der vorliegenden Erfindung ergeben sich aus nachfolgender Beschreibung von Ausführungsbeispielen anhand der Zeichnung.

Figur 1    zeigt schematisch den Aufbau einer Ausführungsform des erfindungsgemäßen Kommunikationsverfahrens nach Art eines Flussdiagramms.

Figuren 2 und 3   zeigen schematisch den Aufbau erfindungsgemäßer Kommunikationssysteme, welche auf der Grundlage erfindungsgemäß ausgestalteter mobiler Einheiten und einer erfindungsgemäß ausgestalteten Schnittstelleneinheit zur Ausführung und/oder Anwendung gemäß dem erfindungsgemäßen Kommunikationsverfahren eingerichtet sind.

Figur 4          zeigt schematisch eine Codebuchbibliothek mit einer Mehrzahl von Codebüchern.

Figuren 5 und 6    zeigen schematisch Aspekte anderer Ausführungsformen des erfindungsgemäßen Kommunikationssystems und des erfindungsgemäßen Kommunikationsverfahrens.

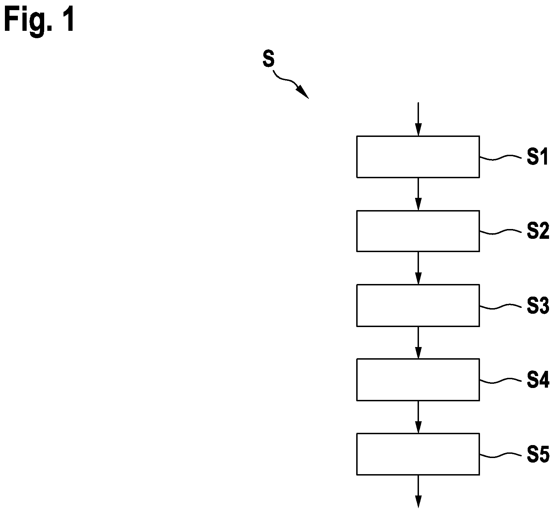

Nachfolgend werden unter Bezugnahme auf die Figuren 1 bis 6 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt schematisch den Aufbau einer Ausführungsform des erfindungsgemäßen Kommunikationsverfahrens S nach Art eines Flussdiagramms.

Im Schritt S1 der in Figur 1 dargestellten Ausführungsform des erfindungsgemäßen Kommunikationsverfahrens S erfolgt eine Kommunikationsanforderung durch eine der mobilen Einheiten, die in den nachfolgenden Figuren mit dem Bezugszeichen 10 und 20 bezeichnet werden. In diesem Zusammenhang kann eine Kommunikationsanforderung zum Beispiel dadurch erfolgen, dass der Fahrer eines Fahrzeugs als erster mobiler Einrichtung 10 einen Datenaustausch mit einem voranfahrenden Fahrzeug als zweiter mobiler Einrichtung 20 initiiert, zum Beispiel im Sinne einer Fahrzeug-zu-Fahrzeugkommunikation. Dies kann ein Datenaustausch zum Beispiel im Hinblick auf die Abfrage einer aktuellen Verkehrssituationen oder dergleichen sein, ist jedoch nicht darauf beschränkt.

Im Schritt S2 wird auf Grund der Kommunikationsanforderung aus dem Schritt S1 in einer externen Schnittstelleneinheit, die im Zusammenhang mit den nachfolgenden Figuren mit dem Bezugszeichen 30 bezeichnet wird, ein Codebuch, nachfolgend mit dem Bezugszeichen Cj bezeichnet, bestimmt oder festgelegt, der für eine Kodier-Dekodiereinheit, nachfolgend mit dem Bezugszeichen 12,22 bezeichnet, charakteristisch ist und diese bestimmt und festlegt. Dieses Bestimmen des Codebuches kann zum Beispiel nur darin bestehen, dass eine Entscheidung getroffen wird, welches Codebuch Cj zu Grunde gelegt werden soll, und dass diese Entscheidung an die involvierten mobilen Einheiten mitgeteilt wird, zum Beispiel durch Übertragen eines für das Codebuch Cj repräsentativen Werts $\gamma j$ (mit z.B. $\gamma j = j$) einer Synchronisationsvariablen $\gamma$ oder allgemein eines Synchronisationselements, welches nachfolgend mit dem Bezugszeichen 52 bezeichnet wird. Der Wert $\gamma j$ der Synchronisationsvariablen $\gamma$ kann dabei das Ergebnis eines Zufallsexperimentes sein.

Dieses Mitteilen im Hinblick auf das festgelegte Codebuch Cj erfolgt im nachfolgenden Schritt S3 des in Figur 1 dargestellten Kommunikationsverfahrens S.

Nach dem Empfang der Mitteilung erfolgt im Schritt S4 der Ausführungsform des erfindungsgemäßen Kommunikationsverfahrens S gemäß Figur 1 in den jeweilig involvierten mobilen Einheiten 10, 20 das Auswählen eines jeweiligen Kodierers, nachfolgend mit den Bezugszeichen 12-1, 22-1 bezeichnet, und/oder eines Dekodierers, nachfolgend mit dem Bezugszeichen 12-2, 22-2 bezeichnet, welche dem definierenden und festlegenden Codebuch Cj zugeordnet sind und in einer jeweiligen mobilen Einheit zusammengefasst als Kodier-Dekodiereinheit 12, 22 aufgefasst werden können.

Dann erfolgt gemäß dem Schritt S5 die eigentliche Kommunikation zwischen den so synchronisierten mobilen Einheiten 10 und 20.

Auf Grund der Unkenntnis der tatsächlichen Gestalt der Zuordnung zwischen den Codebüchern Cj einer zu Grunde liegenden Codebuchbibliothek 50, die vorangehend und nachfolgend auch als Codebucheinheit bezeichnet werden kann, den sie repräsentierenden Werten $\gamma j$ (mit zum Beispiel $\gamma j = j$) der Synchronisationsvariablen $\gamma$ und der vorgehaltenen Mehrzahl an Kodier-Dekodiereinheiten 12, 22 bei externen Störern, die nachfolgend mit dem Bezugszeichen 90 bezeichnet werden, können diese mit ihren Störkanälen, nachfolgend mit dem Bezugszeichen 91 bezeichnet, in die eigentliche Kommunikation zwischen den mobilen Einheiten 10 und 20 nicht eingreifen. Diese verläuft somit ungestört.

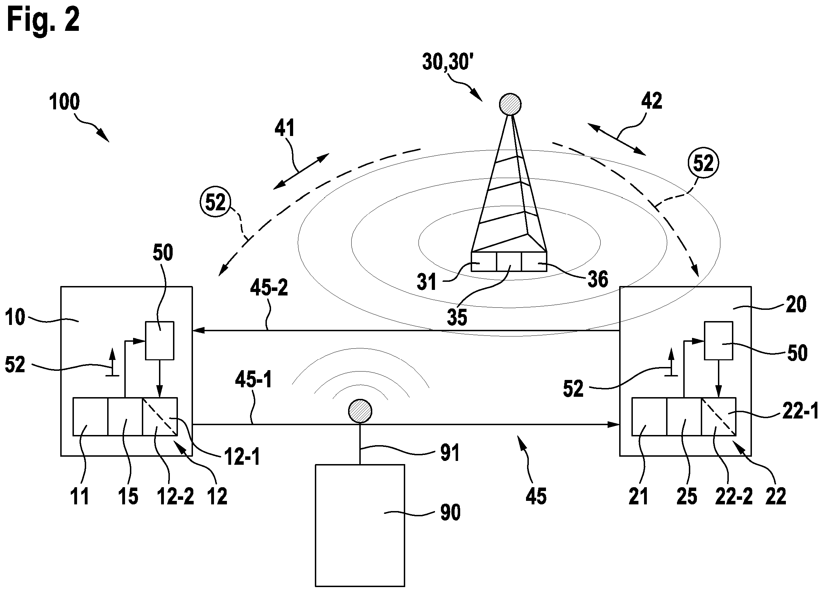

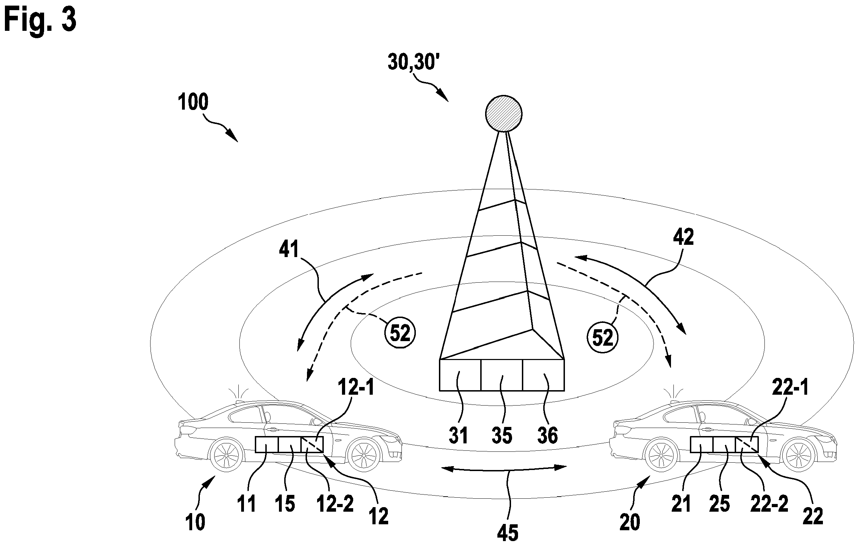

Figuren 2 und 3 zeigen schematisch den Aufbau erfindungsgemäßer Kommunikationssysteme 100, welche auf der Grundlage erfindungsgemäß ausgestalteter mobiler Einheiten 10 und 20 und einer erfindungsgemäß ausgestalteten externen Schnittstelleneinheit 30 zur Ausführung und/oder Anwendung gemäß dem erfindungsgemäßen Kommunikationsverfahren S eingerichtet sind.

Das jeweilige Kommunikationssystem 100 besteht in den in den Figuren 2 und 3 dargestellten Ausführungsformen aus einer ersten mobilen Einheit 10, zum Beispiel einem ersten Fahrzeug, einer zweiten mobilen Einheit 20, zu Beispiel einem zweiten Fahrzeug, und einer in Bezug auf die mobilen Einheiten 10 und 20 externen Schnittstelleneinheit 30 in Form einer externen Infrastrukturkomponente 30'.

Die erste mobile Einheit 10 weist einen ersten Sendeempfänger 11, eine erste Kodier-Dekodiereinheit 12 mit einem ersten Kodierer 12-1 und einem ersten Dekodierer 12-2 auf. Des Weiteren ist eine Steuereinheit 15 vorgesehen, mit welcher der Sendeempfänger 11 und die Auswahl und der Betrieb der konkreten Kodierer 12-1 und Dekodierer 12-2 in der ersten mobilen Einheit 10 gesteuert werden.

Entsprechend weist die zweite mobile Einheit 20 einen zweiten Sendeempfänger 21, eine zweite Kodier-Dekodiereinheit 22 mit einem zweiten Kodierer 22-1 und einen zweiten Dekodierer 22-2 auf. Des Weiteren ist eine Steuereinheit 25 ausgebildet, mit welcher der Sendeempfänger 21 und die Auswahl und der Betrieb der konkreten Kodierer 22-1 und Dekodierer 22-2 in der zweiten mobilen Einheit 20 gesteuert werden.

Die in Bezug auf die ersten und zweiten mobilen Einheiten 10 und 20 ausgebildete externe Schnittstelleneinheit 30, zum Beispiel nach Art einer externen Infrastrukturkomponente 30', weist ebenfalls einen Sendeempfänger 31 und eine Steuereinheit 35 auf, durch welche einerseits der Empfang und das Senden mittels des Sendeempfängers 31 und andererseits die Auswahl eines Codebuches Cj oder eines entsprechenden Werts $\gamma j$ (mit zum Beispiel $\gamma j$ = j) einer Synchronisationsvariablen $\gamma$ als Synchronisationselement 52 und mithin das Bestimmen und Festlegen der Kodierer 12-1, 22-1 und Dekodierer 12-2, 22-2 unter Auswahl durch eine vorgesehene Auswahleinheit 36 in der externen Schnittstelleneinheit 30 erfolgt.

Aufgrund der oben beschriebenen Kommunikationsanforderung S1 durch eine der mobilen Einheiten 10, 20 wird in der externen Schnittstelleneinheit 30 im Zusammenwirken von Steuereinheit 35 und Auswahleinheit 36 die Auswahl des Codebuches Cj angestoßen. Es erfolgt über die Kommunikationskanäle 41 und 42 zwischen der Schnittstelleneinheit 30 und den mobilen Einheiten 10 und 20 die Übertragung des Synchronisationselements 52 oder des Werts des Synchronisationselements 52, zum Beispiel des extern durch die externe Schnittstelleneinheit 30 festgelegten Werts $\gamma j$ (mit zum Beispiel $\gamma j$ = j) der Synchronisationsvariablen $\gamma$ an die mobilen Einheiten 10 und 20. Nach Empfang der Mitteilung über das festgelegte Codebuch Cj, also insbesondere des Werts $\gamma j$ (mit zum Beispiel $\gamma j$ = j) der Synchronisationsvariablen y, in den mobilen Einheiten 10 und 20 erfolgt in diesen, vermittelt durch die Steuereinheiten 15 bzw. 25 die Auswahl aus der Codebuchbibliothek oder Codebucheinheit 50 unter Ausnutzung der 1-zu-1-Zuordnung zwischen den Werten $\gamma j$ (mit zum Beispiel $\gamma j$ = j) der Synchronisationsvariablen $\gamma$ und den Kodier-Dekodiereinheiten 12, 22 mit den Kodierern 12-1, 22-1 und den Dekodierern 12-2, 22-2.

Erst dann nach Festlegung der Kodier-Dekodiereinheiten 12, 22 erfolgt die Etablierung des direkten Kommunikationskanals 45 zwischen den mobilen Einheiten 10 und 20 unter Aufnahme der Teilkanäle 45-1, 45-2.

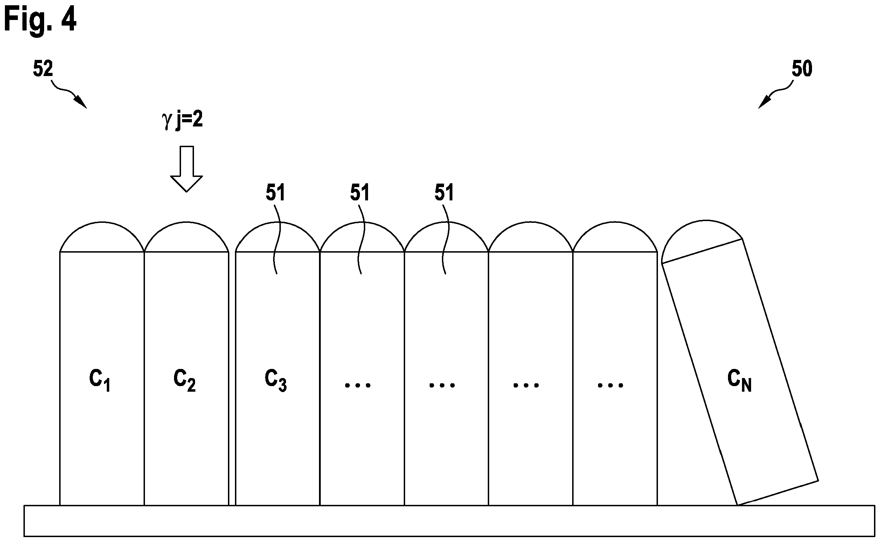

Figur 4 zeigt schematisch eine Codebucheinheit 50 mit einer Mehrzahl von Codebüchern 51, die einzeln auch mit Cj mit j = 1, 2, ... N bezeichnet werden, wobei N eine endliche natürliche Zahl ist und die Anzahl der vorhandenen Codebücher Cj und damit die Anzahl der unterschiedlichen Kodier-Dekodiereinheiten 12, 22 beschreibt. Des Weiteren ist in Figur 4 die 1-zu-1-Zuordnung zwischen den Werten $\gamma j$ (mit zum Beispiel $\gamma j$ = j) der Synchronisationsvariablen $\gamma$ und den verschiedenen Codebüchern Cj erläutert.

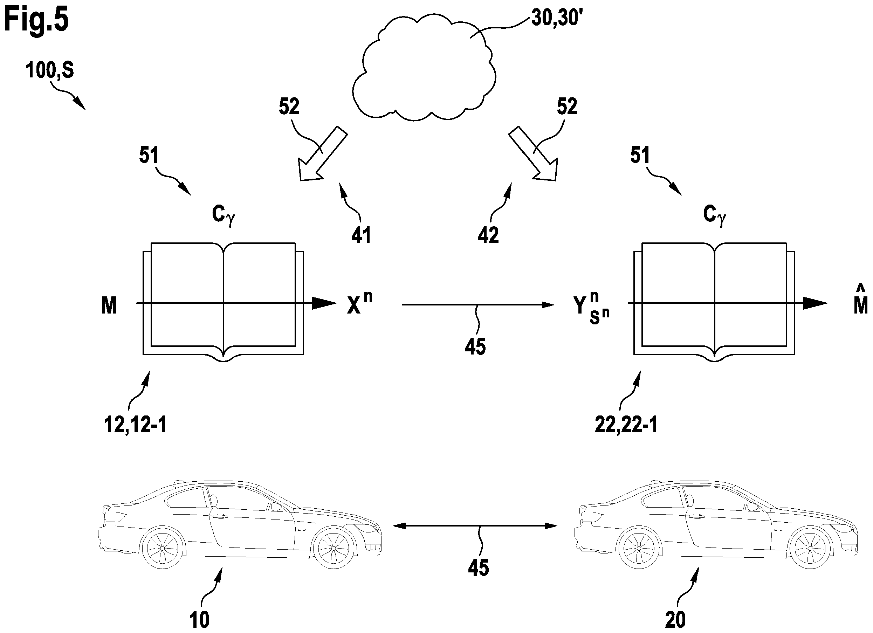

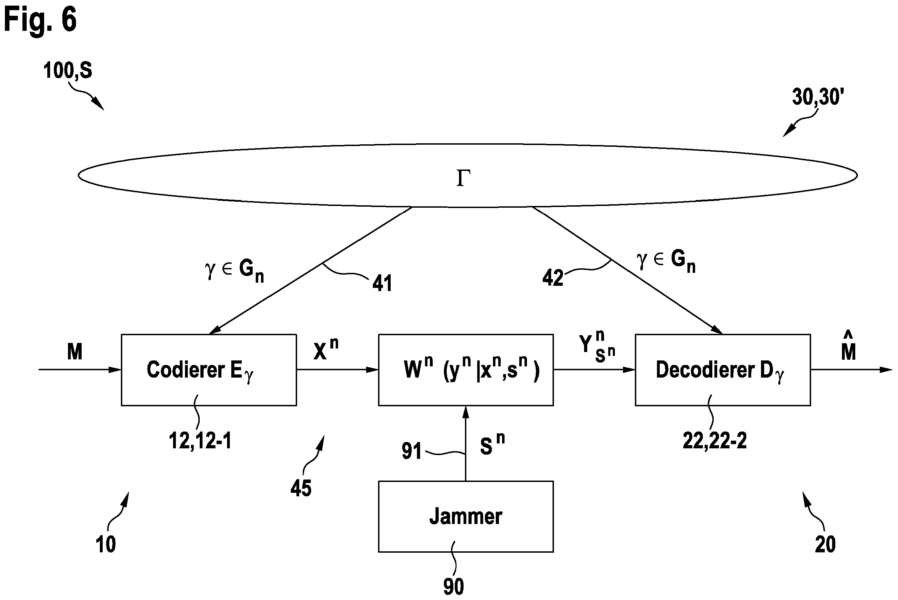

Figuren 5 und 6 zeigen schematisch Aspekte anderer Ausführungsformen des erfindungsgemäßen Kommunikationssystems 100 und des erfindungsgemäßen Kommunikationsverfahrens S.

Nach Übertragung des Werts $\gamma j$ (mit zum Beispiel $\gamma j$ = j) des Synchronisationselements 52 und insbesondere der Synchronisationsvariablen $\gamma$ an die mobilen Einheiten 10 und 20 durch die externe Schnittstelleneinheit 30 als externe Infrastrukturkomponente 30' erfolgt die Auswahl eines entsprechenden Codebuches Cy (entsprechend Cj, wenn $\gamma$ den Wert $\gamma j$ hat, zum Beispiel $\gamma j$ = j) und mithin die Festlegung der entsprechenden Kodier-Dekodiereinheiten 12 und 22 mit einem entsprechenden Kodierer 12-1 auf der Seite der ersten mobilen Einheit 10 als Senderseite und einem korrespondierenden Dekodierer 22-2 auf der Seite der zweiten mobilen Einheit 20 als Empfängerseite in Figur 5.

Im Ergebnis wird der direkte Kommunikationskanal 45 zwischen den mobilen Einheiten 10 und 20 nach Synchronisation durch die externe Schnittstelleneinheit 30 geöffnet. Dabei wird die zu übertragene Nachricht M als Urbildnachricht durch den Kodierer 12-1 in eine kodierte Nachricht $X^n$ überführt, über den Kanal 45 von der ersten mobilen Einheit 10 an die zweite mobile Einheit 20 übertragen, in der zweiten mobilen Einheit 20 als übertragene Nachricht $Y^n_{S^n}$ unter Störeinfluss durch den externen Störer oder Jammer 90 mit Störsignal $S^n$ empfangen und unter Wirkung des Dekodierers 22-2 auf der Seite der zweiten mobilen Einheit 20 in die Nachricht $\hat{M}$ als Bildnachricht gewandelt. Im Idealfall sind die Urbildnachricht M und die Bildnachricht $\hat{M}$ identisch. In diesem optimalen Fall ist die Nachrichtenübertragung verlustfrei.

Diese und weitere Aspekte der vorliegenden Erfindung werden auch anhand der folgenden Darstellung weiter erläutert:

Die vorliegende Erfindung betrifft insbesondere auch die infrastrukturgestützte Bibliothekssynchronisation und sorgt für eine zuverlässige Kommunikation unter unbekannter Interferenz in der Fahrzeug-zu-x-Kommunikation.

Sichere und robuste Kommunikationsverbindungen gehören zu den wichtigsten Voraussetzungen für den Informationsaustausch aus Sicherheitsgründen in Fahrzeug-Ad-hoc-Netzwerken (VANETs) und für anstehende Anwendungen wie zum Beispiel hochautomatisches Fahren.

Es gibt unter anderem folgende sechs mögliche Angriffsszenarien für Fahrzeug-zu-FahrzeugKommunikation (V2V) oder bei der Fahrzeug-zu-Infrastruktur-Kommunikation (V2I):

- Denial of Service (DoS),

- Message Suppression Attack,

- Fabrication Attack,

- Changeation Attack,

- Replay Angriff und

- Sybil Attack.

Aus diesen Szenarien werden folgende Sicherheitsanforderungen abgeleitet: Authentifizierung, Message Integrity, Non-Repudiation, Privacy, Effizienz und Serviceverfügbarkeit (SA).

Nachfolgend wird der Fokus auf die SA als Anforderung von DoS-Attacken gelegt. Die Dienst- oder Serviceverfügbarkeit SA impliziert auch die Netzverfügbarkeit, wenn die Verbindung durch einen Angreifer, zum Beispiel durch einen Jammer 90, oder andere unkoordiniert kommunizierende Parteien, die ein und dasselbe Frequenzband teilen, laut ist oder aktiv gestört wird. Die zu Grunde liegende Voraussetzung für die Sicherung von SA ist das Vorliegen eines robusten Kommunikationskanals und von effizienten Codierungsschemata zur Kompensation von Fading- und Kampfstörungen und von DoS.

Es bestehen folgende Einschränkungen beim herkömmlichen Vorgehen, von welchen die vorliegende Erfindung ausgeht:
Sicherheits- und DoS-Angriffe beeinträchtigen die vorgeschlagenen Anwendungsfälle für die V2I- und V2V-Kommunikation drastisch und können in einer Worst-Case-Abschätzung zu einem Systemzusammenbruch führen.

DoS-Angriffe führen zu langen Verzögerungen zwischen der Übertragung und dem erfolgreichen Empfang eines Datenpakets oder verhindern den Service vollständig, wenn kein Rückübertragungsverfahren, zum Beispiel kein Automated-Repeat-Request (ARQ) angewendet wird. Es gibt viele Ansätze, die sich mit Sicherheit in VANETs und Jamming beschäftigen, wo zum Beispiel Hopping und Channel Switching als vielversprechende Ansätze zur Überwindung von Jamming Attacken zum Einsatz kommen. Trotzdem ergibt sich, dass Hopping das Problem nicht vollständig löst und die Kanalvermittlung erfordert, dass mehrere Transceiver im Fahrzeug 10, 20 eingesetzt werden. Das ist kostspielig und funktioniert nur, wenn das Störsignal 91 des Angreifers 90 auf ein bestimmtes Frequenzband beschränkt ist.

Im Rahmen der Informationstheorie wird ein DoS-Angriff durch einen Störsender 90 generell als ein willkürlich abweichender Kanal (AVC) modelliert, in dem ein Zustandsselektor 90 (Störsender) den Zustand des Kommunikationskanals 45 bestimmen kann. Für die Zwecke von V2V- und V2I-Konzepten muss für jede mögliche Zustandsauswahl eine zuverlässige Kommunikation gewährleistet sein.

Ein Schlüsselproblem eines AVC ist, dass ein manipuliertes und/oder verzerrtes Ausgangssymbol des Kommunikationskanals 45 zwischen dem Sender, zum Beispiel der ersten mobilen Einheit 10, und dem legitimen Empfänger, zum Beispiel einer zweiten mobilen Einheit 20, wie ein gültiges Codewort aussehen könnte. Diese Situation wird als Symmetrisierbarkeit bezeichnet. So kann der Störsender 90 oder genauer gesagt die Zustandsfolge des Kanals einen gültigen Kanaleingang emulieren. Für den Decoder 22-2 gibt es keine Chance zu entscheiden, ob das empfangene Codewort effektiv mit der codierten Nachricht übereinstimmt und somit korrekt decodiert. In dieser Situation ist die Kapazität der Kommunikationsverbindung tatsächlich null.

Darüber hinaus sind modernste Kommunikationssysteme in Bezug auf ein mittleres Fehlerkriterium ausgelegt. Dies bedeutet, dass für die Mehrheit der übermittelten Nachrichten eine zuverlässige Kommunikation gewährleistet ist. Für Anwendungen, die sich kritisch auf eine robuste Kommunikationsverbindung verlassen, wie zum Beispiel sicherheitsgerichtete V2V-Kommunikation, muss für jede über den Link übertragene Nachricht eine Nachgiebigkeit gewährleistet werden. Somit sind Codierungsschemata, die unter einem maximalen Fehlerkriterium zuverlässig arbeiten, eine notwendige Voraussetzung für zukünftige Anwendungen in der Fahrzeugkommunikation.

Vorschlag zur Lösung

Die von der Erfindung vorgeschlagene Lösung macht Gebrauch von der Mobilität, die in einem Fahrzeugkommunikationsszenario in Kombination mit einer Synchronisationsvariablen SV oder $\gamma$ vorliegt, um die Auswahl des Kodierers 12-1, 22-1 oder $E_\gamma$ und des Dekodierers 12-2, 22-2 oder $D_\gamma$ zu koordinieren, die in herkömmlichen Ansätzen vorgegeben sind.

Dieses Koordinationsverfahren basiert auf einer Koordinationsressource, die zum Beispiel ein Sendesignal sein kann. Voraussetzung für die ordnungsgemäße Arbeit ist, dass beide Parteien oder Fahrzeuge - also beide mobile Einheiten 10 und 20 in den in den Figuren gezeigten Beispielen - der Kommunikationsverbindung die Quelle des Rundfunksignals in minimalem Abstand übergeben. Somit kann eine Hochleistungsverbindung zur Synchronisation hergestellt werden. Dieses Szenario wird zum Beispiel auf einer Autobahn erreicht, wo sich eine Schnittstelleneinheit 30 als mobiler Zugangspunkt, als eine Basisstation oder als eine Straßenseiteneinheit in unmittelbarer Nähe befindet. So kann die Mobilität der kommunizierenden Parteien 10, 20 als wichtige Gewährleistung für das vorgeschlagene Schema verstanden werden. Ein Informationstheoretisches Blockdiagramm des Kommunikationskanals ist in Figur 6 gezeigt.

In Figur 6 ist ein Blockschaltbild dargestellt für die Bibliothekssynchronisation für die Kommunikation unter beliebig variierendem Rauschen.

Die Wahrscheinlichkeitsmassenfunktion W, die die Beziehung zwischen einer Eingangssequenz $x^n$ und einer Ausgangssequenz $y^n$ kennzeichnet, wird mit $W^n(y^n|x^n,s^n)$ bezeichnet. Darüber hinaus ist $s^n \in S^n$ die Zustandsrealisierung des Kommunikationskanals 91, der durch den Störsender 90 gewählt wird. Das Ziel des vorgeschlagenen Systems ist ein zuverlässiger Empfang und die Rekonstruktion der Nachricht M, also mit dem Ziel $M = \hat{M}$ für jede Wahl von $s^n$ zu gewährleisten.

Die Synchronisationsvariable SV oder $\gamma$ als Synchronisationselements 52 und als Ressource kann mit separaten, aber korrelierten Signalen erzeugt werden, die sich aus verrauschten Versionen eines Funksignals oder anderer Umgebungsparameter ergeben.

Das entsprechende infrastrukturunterstützte Schema ist in Figur 2 dargestellt. Hier kann die Infrastrukturkomponente 30' als externe Schnittstelleneinheit 30 zum Beispiel eine traditionelle Basisstation eines Funknetzes oder eine straßenseitige Einheit für Fahrzeugkonnektivität sein.

Figur 2 zeigt also ein Beispielszenario für die erfindungsgemäß vorgeschlagene infrastrukturgestützte Bibliothekssynchronisation im Sinne einer erfindungsgemäßen Synchronisation erster und zweiter mobiler Einheiten 10 bzw. 20 über eine externe Schnittstelleneinheit 30, welche die Auswahl eines Codebuches Cj zur Definition und Festlegung der entsprechenden Kodier-Dekodiereinheiten 12, 22 in den mobilen Einheiten 10, 20 bewirkt.

Nachdem die Synchronisation zwischen dem Sender, also zum Beispiel der ersten mobilen Einheit 10, und dem Empfänger, zum Beispiel der zweiten mobilen Einheit 20, abgeschlossen ist, wird die Synchronisationsvariable SV oder $\gamma$ als Synchronisationselement 52 verwendet, um die gestaute oder verzerrte Kommunikationsverbindung zu "heilen", indem er ein geeignetes Codebuch Cj aus der Codebuchbibliothek, aufgefasst als Codebucheinheit 50, auswählt. Dies wird durch die Verwendung der Synchronisationsvariablen SV oder $\gamma$ erreicht, um ein geeignetes Codebuch Cj aus der Bibliothek 50 am Kodierer oder Encoder 12-1, 22-1 und dem Decoder 12-2, 20-2 auszuwählen.

Nach dem Verfahren der adaptiven Modulation realisiert das vorgeschlagene Schema ein adaptives Codebuchauswahlverfahren.

Schließlich nutzt das vorgeschlagene erfindungsgemäße Kommunikationsverfahren S gemäß einer anderen Sichtweise der vorliegenden Erfindung folgende Phasen:

| | |
|---|---|
| 1. Phase: | Synchronisation - Generieren eines Werts $\gamma j$ (zum Beispiel mit $\gamma j = j$) einer gemeinsamen Synchronisationsvariablen $\gamma$ als Synchronisationselement 52. |
| 2. Phase: | Codebuchauswahl - Auswahl des Codebuchs Cj aus der Bibliothek 50 anhand des Werts $\gamma j$ (zum Beispiel mit $\gamma j = j$) der Synchronisationsvariablen $\gamma$. |
| 3. Phase: | Informationsaustausch - Kommunikation mit adaptiv gewähltem (nach SV) Codebuch Cj mit entsprechendem Kodierer/Dekodierer 12-1, 12-2; 12-2, 22-2. |

Die zuvor beschriebene Prozedur wird für einen V2V-Informationsaustauschprozess visualisiert, der in Abbildung 3 dargestellt ist.

Die Figuren 3 bis 5 zeigen einen bibliothekssynchronisationsbasierten V2V-Kommunikationsprozess als Ausführungsform des erfindungsgemäßen Kommunikationsverfahrens S.

Da dem Jammer 90 die Synchronisationsvariable SV oder $\gamma$ nicht bekannt ist, ist es ihm nicht möglich, seine Zustandsselektionsstrategie anzupassen, um die durch die Synchronisationsvariable SV oder $\gamma$-unterstützte Kommunikation zwischen den mobilen Einheiten 10 und 20 zu stören.

Mit dem vorgeschlagenen Schema wird eine zuverlässige Kommunikation über den Kanal 45 zwischen den mobilen Einheiten 10 und 20 erreicht und kann auch garantiert werden, solange genügend Synchronisationsressourcen auf beiden Seiten zur Verfügung stehen.

Darüber hinaus kann das vorgeschlagene Schema für die Geheimschlüsselerzeugung verwendet werden, um eine sichere Kommunikation in Gegenwart eines so genannten Wiretappers zu ermöglichen.

Vorteile der vorgeschlagenen Erfindung ergeben sich wie folgt:

Die vorliegende Erfindung basiert auf physikalischen und informationstheoretischen Prinzipien.

Somit ist die Wirksamkeit im Hinblick auf die Robustheit gegen DoS-Attacken messbar und kann aus physikalischen Größen abgeleitet werden. Das vorgeschlagene Schema ermöglicht die Kontrolle des Mittelwerts der Fehlerwahrscheinlichkeit und auch des maximalen Fehlers (für eine Diskussion siehe Einschränkungen des derzeitigen Standes der Technik). So kann für jede Nachricht eine zuverlässige Kommunikation gewährleistet werden. Diese Fähigkeit ist in dem vorgeschlagenen Schema und einer Einrichtung für sicherheitsbezogene Kommunikation, wie zum Beispiel für die Übertragung einer Warnung oder eines Signals zum harten Bremsen oder einer Kreuzungskollisionswarnung, inhärent. Darüber hinaus können auf der Grundlage des vorgeschlagenen Konzepts sichere und robuste Protokolle für die Zertifizierung und Standardisierung entwickelt werden, die den Anforderungen der besonders zuverlässigen Konnektivität für den hochautomatisierten Fahr- oder Sicherheitsmeldungsaustausch in VANETs entsprechen. Es ist aus den zu Grunde liegenden informationstheoretischen Zusammenhängen bewiesen, dass die vorgeschlagene Erfindung, die auf der Bibliothekssynchronisation basiert, die einzige Möglichkeit ist, eine zuverlässige Kommunikation in beliebig variierenden Kanälen sicherzustellen, d.h. wenn die Kommunikationsverbindung 45 durch ein beliebig variierendes Rauschen oder Störsignal anderer Art beeinflusst wird.

Neben der vorstehenden schriftlichen Beschreibung der Erfindung wird zu deren ergänzender Offenbarung hiermit explizit auf die zeichnerische Darstellung der Erfindung in den Figuren 1 bis 6 Bezug genommen.

**Bezugszeichenliste**

| | |
|---|---|
| 10 | (erste) mobile Einrichtung, (erstes) Fahrzeug |
| 11 | Sendeempfänger |
| 12 | Kodier-Dekodiereinheit, Kodierer-Dekodierer |
| 12-1 | Kodierer |
| 12-2 | Dekodierer |
| 15 | Steuereinheit |

| | |
|---|---|
| 20 | (zweite) mobile Einrichtung, (zweites) Fahrzeug |
| 21 | Sendeempfänger |
| 22 | Kodier-Dekodiereinheit, Kodierer-Dekodierer |
| 22-1 | Kodierer |
| 22-2 | Dekodierer |
| 25 | Steuereinheit |

| | |
|---|---|
| 30 | (externe) Schnittstelleneinheit |
| 30' | Infrastrukturkomponente, Basisstation, Hotspot |
| 31 | Sendeempfänger |
| 35 | Steuereinheit |
| 36 | Auswahleinheit |

| | |
|---|---|
| 41 | Kommunikationskanal zur Schnittstelleneinheit 30 |
| 42 | Kommunikationskanal zur Schnittstelleneinheit 30 |
| 45 | Kommunikationskanal zwischen mobilen Einheiten 10, 20 |
| 45-1 | Teilkanal |
| 45-2 | Teilkanal |

| | |
|---|---|
| 50 | Codebuchbibliothek, Codebucheinheit |
| 51 | Codebuch |
| 52 | Synchronisationselement |

| | |
|---|---|
| 90 | Störeinheit, Jammer |
| 91 | Störkanal |

| | |
|---|---|
| 100 | Kommunikationssystem |

| | |
|---|---|
| Cj | Codebuch |
| S | Kommunikationsverfahren |

S1 Kommunikationsanforderung durch eine mobile Einheit 10, 20
S2 Bestimmen eines definierenden Codebuches Cj in der externen Schnittstelleneinheit 30
S3 Mitteilen des definierenden Codebuches Cj von der externen Schnittstelleneinheit 30 an die mobilen Einheiten 10, 20
S4 Auswählen eines Kodierers 12-1, 22-1/Dekodierers 12-2, 22-2 zum definierenden Codebuch Cj in den mobilen Einheiten 10, 20
S5 Kommunikation zwischen den mobilen Einheiten 10, 20

γ Synchronisationsvariable
γj Wert der Synchronisationsvariablen y/des Synchronisationselements 52

**Patentansprüche**

1. Kommunikationsverfahren (S) für die Kommunikation zwischen als Fahrzeuge ausgebildeten mobilen Einheiten (10, 20), bei welchem

   - zwischen den mobilen Einheiten (10, 20) übertragene Information senderseitig mittels eines Kodierers (12-1, 22-1) kodiert und empfängerseitig mittels eines Dekodierers (12-2, 22-2) dekodiert wird und
   - die mobilen Einheiten (10, 20) vor Kommunikation (S5) miteinander in Kommunikation (S3) mit einer zu den mobilen Einheiten (10, 20) externen Schnittstelleneinheit (30) synchronisiert werden,

   **dadurch gekennzeichnet, dass**

   - die Synchronisation der mobilen Einheiten (10, 20) erfolgt,

     - indem durch die externe Schnittstelleneinheit (30) ein - einen Kodierer (12-1, 22-1) und/oder einen Dekodierer (12-2, 22-2) definierendes oder festlegendes - Codebuch (Cj) bestimmt (S2) wird und
     - indem durch die externe Schnittstelleneinheit (30) den mobilen Einheiten (10, 20) das bestimmte Codebuch (Cj) mitgeteilt (S3) wird,

   - das Bestimmen (S2) des definierenden Codebuches (Cj) durch Festlegen eines Werts (γj) eines das definierende Codebuch (Cj) bestimmenden Synchronisationselements (52) und insbesondere einer Synchronisationsvariablen (γ) durch die externe Schnittstelleneinheit (30) erfolgt und
   - das Mitteilen (S3) an die mobilen Einheiten (10, 20) insbesondere durch Übertragen des Werts (γj) des bestimmenden Synchronisationselements (52) und insbesondere der Synchronisationsvariablen (γ) von der externen Schnittstelleneinheit (30) an die mobilen Einheiten (10, 20) erfolgt.

2. Kommunikationsverfahren nach Anspruch 1, bei welchem das Bestimmen (S2) des definierenden Codebuches (Cj) auf der Grundlage eines zumindest teilweise deterministischen, zufälligen und/oder pseudozufälligen Algorithmus' erfolgt.

3. Kommunikationsverfahren nach einem der vorangehenden Ansprüche, bei welchem das Bestimmen (S2) des definierenden Codebuches (Cj) durch Auswählen eines definierenden Codebuches (Cj) aus einer diskreten Mehrzahl definierender Codebücher (Cj) aus einer Codebuchbibliothek (50) erfolgt und insbesondere durch eine entsprechende Auswahl eines Werts (γj) für das bestimmende Synchronisationselement (52) und der Synchronisationsvariablen (γ) aus einer diskreten Anzahl von Werten.

4. Kommunikationsverfahren nach einem der vorangehenden Ansprüche, bei welchem eine Mehrzahl möglicher definierender Codebücher (Cj) und insbesondere eine Mehrzahl möglicher Werte (γj) für das bestimmende Synchronisationselement (52) und der Synchronisationsvariablen (γ) in einer 1-zu-1-Korrespondenz zu einer entsprechenden Mehrzahl von Kodierern (12-1, 22-1) und/oder Dekodierern (12-2, 22-2) und insbesondere zu einer entsprechenden Mehrzahl zu Grunde liegender Kodier-Dekodiereinheiten (12, 22) stehen.

5. Kommunikationsverfahren nach einem der vorangehenden Ansprüche, bei welchem die mobilen Einheiten (10, 20) auf der Grundlage des von der externen Schnittstelleneinheit (30) mitgeteilten definierenden oder festlegenden Codebuches (Cj) und insbesondere auf der Grundlage des Werts (γj) des Synchronisationselements (52) und insbesondere der Synchronisationsvariablen (γ) aus einer in der jeweiligen mobilen Einheit (10, 20) vorgegebenen Codebuchbibliothek (50) mit einer entsprechenden Mehrzahl möglicher definierender oder festlegender Codebücher (Cj) ein entsprechendes Codebuch (Cj) auswählen und so den Kodierer (12-1, 22-1) und Dekodierer (12-2, 22-2) der jeweiligen mobilen Einheit (10, 20) definieren und festlegen.

6. Mobile Einheit (10, 20), welche

- als Fahrzeug und insbesondere als Kraftfahrzeug ausgebildet ist,
- zur Kommunikation mit anderen als Fahrzeuge ausgebildeten mobilen Einheiten (10, 20) und/oder mit einer externen Schnittstelleneinheit (30) gemäß einem Kommunikationsverfahren (S) nach einem der Ansprüche 1 bis 5 eingerichtet ist und
- dazu insbesondere einen Sendeempfänger (11, 21), eine Kodier-Dekodiereinheit (12, 22) und eine Steuereinheit (15, 25) zu deren Steuerung gemäß einem Kommunikationsverfahren (S) nach einem der Ansprüche 1 bis 5, aufweist.

7. Schnittstelleneinheit (30), welche

- zur Kommunikation mit zur Schnittstelleneinheit (30) externen und als Fahrzeuge ausgebildeten mobilen Einheiten (10, 20), insbesondere nach Anspruch 6, und/oder mit anderen externen Schnittstelleneinheiten (30) gemäß einem Kommunikationsverfahren (S) nach einem der Ansprüche 1 bis 5 eingerichtet ist und
- dazu insbesondere einen Sendeempfänger (31) und eine Steuereinheit (35) zu deren Steuerung, insbesondere gemäß einem Kommunikationsverfahren (S) nach einem der Ansprüche 1 bis 5, aufweist.

8. Schnittstelleneinheit (30) nach Anspruch 7, welche als externe Infrastrukturkomponente (30'), als Basisstationseinrichtung, als Hotspot, als Road-Side-Unit, insbesondere gemäß dem DSRC-Standard, und/oder als mobile Einrichtung eines Drahtlosübertragungssystems und insbesondere eines Mobilfunknetzes ausgebildet ist.

9. Kommunikationssystem (100),

- mit mindestens einer ersten als Fahrzeug ausgebildeten mobilen Einheit (10), mindestens einer zweiten als Fahrzeug ausgebildeten mobilen Einheit (20) und mindestens einer und zu den mobilen Einheiten (10, 20) externen Schnittstelleneinheit (30),
- bei welchem die mobilen Einheiten (10, 20) und die externe Schnittstelleneinheit (30) dazu eingerichtet sind, im Zusammenwirken ein Kommunikationsverfahren (S) nach einem der Ansprüche 1 bis 5 auszuführen oder bei einem solchen Verfahren verwendbar zu sein,
- wobei insbesondere die erste mobile Einheit (10) und/oder die zweite mobile Einheit (20) nach Anspruch 6 und/oder die externe Schnittstelleneinheit (30) nach Anspruch 7 oder 8 ausgebildet sind.

**Claims**

1. Communication method (S) for communication between mobile units (10, 20) designed as vehicles, in which

- information transmitted between the mobile units (10, 20) is encoded on the transmitter side by means of an encoder (12-1, 22-1) and is decoded on the receiver side by means of a decoder (12-2, 22-2), and
- the mobile units (10, 20) are synchronized in communication (S3) with an external interface unit (30) outside the mobile units (10, 20) prior to communication (S5) with one another,

**characterized in that**

- the synchronization of the mobile units (10, 20) is performed

  - by a codebook (Cj) that defines or specifies an encoder (12-1, 22-1) and/or a decoder (12-2, 22-2) being determined (S2) by the external interface unit (30) and
  - by the determined codebook (Cj) being communicated (S3) to the mobile units (10, 20) by the external interface unit (30),

- the defining codebook (Cj) is determined (S2) by specification by the external interface unit (30) of a value ($\gamma$j) of a synchronization element (52) determining the defining codebook (Cj) and in particular a synchronization variable (y), and
- the communication (S3) to the mobile units (10, 20) is performed in particular by transmission of the value ($\gamma j$) of the determining synchronization element (52) and in particular the synchronization variable ($\gamma$) from the external interface unit (30) to the mobile units (10, 20).

2. Communication method according to Claim 1, in which the defining codebook (Cj) is determined (S2) on the basis of an at least partially deterministic, random and/or pseudorandom algorithm.

3. Communication method according to one of the preceding claims, in which the defining codebook (Cj) is determined (S2) by selection of a defining codebook (Cj) from a discrete plurality of defining codebooks (Cj) from a codebook library (50) and in particular by corresponding selection of a value ($\gamma j$) for the determining synchronization element (52) and the synchronization variable ($\gamma$) from a discrete number of values.

4. Communication method according to one of the preceding claims, in which a plurality of possible defining codebooks (Cj) and in particular a plurality of possible values ($\gamma j$) for the determining synchronization element (52) and the synchronization variable ($\gamma$) are in a 1-to-1 correspondence with a corresponding plurality of encoders (12-1, 22-1) and/or decoders (12-2, 22-2) and in particular with a corresponding plurality of underlying encoding-decoding units (12, 22).

5. Communication method according to one of the preceding claims, in which, on the basis of the defining or specifying codebook (Cj) communicated by the external interface unit (30) and in particular on the basis of the value ($\gamma j$) of the synchronization element (52) and in particular the synchronization variable (y), the mobile units (10, 20) select a corresponding codebook (Cj) from a codebook library (50), which is predefined in the respective mobile unit (10, 20) with a corresponding plurality of possible defining or specifying codebooks (Cj), and thus define and specify the encoder (12-1, 22-1) and decoder (12-2, 2 22-2) of the respective mobile unit (10, 20).

6. Mobile unit (10, 20) which

   - is designed as a vehicle, and in particular as a motor vehicle,
   - is configured to communicate with other mobile units (10, 20) designed as vehicles and/or with an external interface unit (30) using a communication method (S) according to one of Claims 1 to 5, and
   - for this purpose has in particular a transceiver (11, 21), an encoding-decoding unit (12, 22) and a control unit (15, 25) for the control thereof using a communication method (S) according to one of Claims 1 to 5.

7. Interface unit (30) which

   - is configured to communicate with external mobile units (10, 20) outside the interface unit (30) and designed as vehicles, in particular according to Claim 6, and/or with other external interface units (30) using a communication method (S) according to one of Claims 1 to 5, and
   - for this purpose has in particular a transceiver (31) and a control unit (35) for the control thereof, in particular using a communication method (S) according to one of Claims 1 to 5.

8. Interface unit (30) according to Claim 7, which is designed as an external infrastructure component (30'), as a base station device, as a hotspot, as a roadside unit, in particular according to the DSRC standard, and/or as a mobile device of a wireless transmission system and in particular of a mobile radiocommunication network.

9. Communication system (100),

   - having at least one first mobile unit (10) designed as a vehicle, at least one second mobile unit (20) designed as a vehicle and at least one external interface unit (30) outside the mobile units (10, 20),
   - in which the mobile units (10, 20) and the external interface unit (30) are configured to carry out a communication method (S) according to one of Claims 1 to 5 in interaction, or to be usable in such a method,
   - wherein in particular the first mobile unit (10) and/or the second mobile unit (20) is/are designed according to Claim 6 and/or the external interface unit (30) is designed according to Claim 7 or 8.

**Revendications**

1. Procédé de communication (S) pour la communication entre des unités mobiles (10, 20) réalisées en tant que véhicules, où

   - une information transmise entre les unités mobiles (10, 20) est codée côté émetteur au moyen d'un codeur (12-1, 22-1) et est décodée côté récepteur au moyen d'un décodeur (12-2, 22-2) et
   - les unités mobiles (10, 20) sont synchronisées avant toute communication (S5) entre elles en communication (S3) avec une unité d'interface (30) externe aux unités mobiles (10, 20),

   **caractérisé en ce que**

   - la synchronisation des unités mobiles (10, 20) est effectuée

      - - **en ce qu'**un document de codage (Cj) - définissant ou fixant un codeur (12-1, 22-1) et/ou un décodeur (12-2, 22-2) - est défini (S2) par l'unité d'interface (30) externe, et
      - - **en ce que** le document de codage (Cj) défini est transmis (S3) aux unités mobiles (10, 20) par l'unité d'interface (30) externe,

   - la définition (S2) du document de codage (Cj) de définition est effectuée en fixant une valeur ($_\gamma$j) d'un élément de synchronisation (52) définissant le document de codage (Cj) de définition et en particulier d'une variable de synchronisation ($_\gamma$) par l'unité d'interface (30) externe, et
   - la transmission (S3) aux unités mobiles (10, 20) est effectuée en particulier en transférant la valeur ($_\gamma$j) de l'élément de synchronisation (52) de définition et en particulier les variables de synchronisation ($_\gamma$) depuis l'unité d'interface (30) externe aux unités mobiles (10, 20).

2. Procédé de communication selon la revendication 1, où la définition (S2) du document de codage (Cj) de définition est effectuée sur la base d'un algorithme au moins en partie déterministe, aléatoire et/ou pseudo-aléatoire.

3. Procédé de communication selon l'une quelconque des revendications précédentes, où la définition (S2) du document de codage (Cj) de définition est effectuée en sélectionnant un document de codage (Cj) de définition parmi une multitude discrète de documents de codage (Cj) de définition issue d'une bibliothèque de documents de codage (50) et en particulier en sélectionnant de manière correspondante une valeur ($_\gamma$j) pour l'élément de synchronisation (52) de définition et les variables de synchronisation ($_\gamma$) parmi un nombre discret de valeurs.

4. Procédé de communication selon l'une quelconque des revendications précédentes, où une multitude de documents de codage (Cj) de définition possibles et en particulier une multitude de valeurs ($_\gamma$j) possibles pour l'élément de synchronisation (52) de définition et des variables de synchronisation ($_\gamma$) correspondent 1 à 1 à une multitude correspondante de codeurs (12-1, 22-1) et/ou de décodeurs (12-2, 22-2) et en particulier à une multitude correspondante d'unités de codage-décodage (12, 22) sous-jacentes.

5. Procédé de communication selon l'une quelconque des revendications précédentes, où les unités mobiles (10, 20) sélectionnent un document de codage (Cj) correspondant sur la base du document de codage (Cj) de définition ou de fixation transmis par l'unité d'interface (30) externe et en particulier sur la base de la valeur ($_\gamma$j) de l'élément de synchronisation (52) et en particulier des variables de synchronisation ($_\gamma$) parmi une bibliothèque de documents de codage (50) spécifiée dans l'unité mobile (10, 20) respective avec une multitude correspondante de documents de codage (Cj) de définition ou de fixation éventuels et définissent et fixent ainsi le codeur (12-1, 22-1) et le décodeur (12-2, 22-2) de l'unité mobile (10, 20) respective.

6. Unité mobile (10, 20), laquelle

   - est réalisée en tant que véhicule et en particulier en tant que véhicule à moteur,
   - est mise au point pour communiquer avec d'autres unités mobiles (10, 20) réalisées en tant que véhicules et/ou avec une unité d'interface (30) externe selon un procédé de communication (S) selon l'une quelconque des revendications 1 à 5, et
   - présente de plus en particulier un récepteur-émetteur (11, 21), une unité de codage-décodage (12, 22) et une unité de commande (15, 25) aux fins de sa commande selon un procédé de communication (S) selon l'une quelconque des revendications 1 à 5.

**7.** Unité d'interface (30), laquelle

- est mise au point pour communiquer avec des unités mobiles (10, 20) externes à l'unité d'interface (30) et réalisées en tant que véhicules, en particulier selon la revendication 6, et/ou avec d'autres unités d'interface (30) externes selon un procédé de communication (S) selon l'une quelconque des revendications 1 à 5, et
- présente de plus en particulier un récepteur-émetteur (31) et une unité de commande (35) aux fins de sa commande, en particulier selon un procédé de communication (S) selon l'une quelconque des revendications 1 à 5.

**8.** Unité d'interface (30) selon la revendication 7, laquelle est réalisée en tant que composante d'infrastructure externe (30'), en tant que système de station de base, en tant que hotspot, en tant qu'unité située au bord, en particulier selon le protocole DSRC, et/ou en tant que système mobile d'un système de transmission sans fil et en particulier d'un réseau mobile radio.

**9.** Système de communication (100),

- avec au moins une première unité mobile (10) réalisée en tant que véhicule, au moins une deuxième unité mobile (20) réalisée en tant que véhicule et au moins une unité d'interface (30) externe aux unités mobiles (10, 20),
- où les unités mobiles (10, 20) et l'unité d'interface (30) externe sont mises au point pour exécuter en coopération un procédé de communication (S) selon l'une quelconque des revendications 1 à 5 ou pour pouvoir être utilisées dans un tel procédé,
- dans lequel en particulier la première unité mobile (10) et/ou la deuxième unité mobile (20) sont réalisées selon la revendication 6 et/ou l'unité d'interface (30) externe est réalisée selon la revendication 7 ou 8.

# Fig. 1

S

S1 S2 S3 S4 S5

Fig. 2

Fig. 3

# Fig. 4

EP 3 616 357 B1

Fig.5

**Fig. 6**

EP 3 616 357 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009063861 A1

- US 2016119073 A1

**In der Beschreibung aufgeführte Nicht-Patentliteratur**

- **ZHAO KEPENG et al.** 2015 IEEE/CIC INTERNATIONAL CONFERENCE ON COMMUNICATIONS IN CHINA (ICCC). IEEE, 02. November 2015